# FASCICULE DE BREVET EUROPEEN

(11) **EP 4 498 115 B1**
(45) Date de publication et mention de la délivrance du brevet: **14.10.2026**
(21) Numéro de dépôt: 24190480.4
(22) Date de dépôt: 23.07.2024
(51) Int. Cl.: G01S 7/40, G01S 13/88

(54) **SYSTEME NUMERIQUE DE VALIDATION DE RADIOALTIMETRE**
DIGITALES FUNKHÖHENMESSER-VALIDIERUNGSSYSTEM
DIGITAL RADIO ALTIMETER VALIDATION SYSTEM

(30) Priorité: 27.07.2023 FR 2308110
(43) Date de publication de la demande: 29.01.2025
(73) Titulaire: THALES, 92190 Meudon (FR)
(72) Inventeur: CARSENAT, David, 19311 BRIVE LA GAILLARDE Cedex (FR); PORTEBOEUF, Benoît, 92622 GENNEVILLIERS Cedex (FR); ROUX, Nicolas, 92622 GENNEVILLIERS Cedex (FR)
(74) Mandataire: Atout PI Laplace

(56) Documents cités:
- US-A- 4 679 049
- US-A1- 2018 306 904
- ANONYMOUS: "Altimeter Optical Delay Line", 28 February 2021 (2021-02-28), XP093101986, Retrieved from the Internet <URL:https://rfoptic.com/wp-content/uploads/2021/03/Altimeter-ODL-6GHz.pdf> [retrieved on 20231115]

## Description

L'invention porte sur une carte RF numérique de validation de radioaltimètre ou altimètre radar, à signaux radar à ondes entretenues modulées en fréquence ou FMCW pour acronyme de "Frequency-Modulated Continuous-Wave" en langue anglaise.

Un radioaltimètre ou altimètre radar est un instrument permettant de mesurer la distance d'un aéronef au-dessus du sol, en utilisant le principe du Radar.

La validation d'un radioaltimètre nécessite de retarder le signal émis selon des ordres de grandeurs très variés, de quelques dizaines de µs à quelques dizaines de ms. Les lignes à retard physiques sont encombrantes, de coût élevé, et limitées dans les scénarii de test possibles qu'elles offrent.

Certains systèmes numériques existent et offrent plus de flexibilité, mais restent assez simplistes et ne permettent pas de simuler de très faibles hauteurs pour des radioaltimètres à pente asservie. US 2018/0306904 A1 divulgue un système de test pour radar FMCW, notamment utilisable pour tester un radioaltimètre intégré. Ce système comprend une chambre anéchoïque, une antenne de test et un circuit de test configuré pour recevoir un signal radar FMCW émis par le radar à tester et générer un signal de retour radar simulé. Le signal de retour simulé peut notamment être obtenu par mélange du signal reçu avec un signal de mélange de fréquence fixe ou variable, afin de simuler une distance donnée. US 4 679 049 A divulgue un simulateur de retard pour appareil de mesure de distance FM-CW, notamment pour radioaltimètre. Ce simulateur comprend une ligne à retard fonctionnant en mode réflexion, un circulateur et des interrupteurs haute fréquence commandés de manière à sélectionner des échos d'ordres différents. Le dispositif permet ainsi de simuler plusieurs distances de test au moyen de retards physiques ou quasi-physiques associés à la ligne à retard et aux échos sélectionnés.

Les systèmes de l'art antérieur ne permettent pas de simuler des hauteurs très faibles (proches de 0 pied) et très hautes à la fois (proches de 10 000 pieds) de manière flexible et compatible avec les radioaltimètres à pente asservie.

Aussi, il est proposé, selon un aspect de l'invention, un système numérique de validation de radioaltimètre, muni d'une interface RF d'entrée/sortie et caractérisé par une latence incompressible τ, configuré pour recevoir un signal *s(t)* de chirp linéaire (FMCW) à onde continue modulée linéairement en fréquence *f*(*t*) *= αt + β* et à phase quadratique *s(t) = e*^{2*jπ*(*αt*²/2 *+βt+γ*)}, pouvant également s'écrire sous forme complexe en coordonnées cartésiennes *I*(*t*) *+ jQ(t), t* représentant le temps, et configuré pour le réémettre selon un retard configurable et délivrer au radioaltimètre un signal *I'*(*t*) *+ jQ*'(*t*) exactement compensé en fréquence pour la latence τ par une extrapolation linéaire de sa phase par calcul de différence entre la phase courante et la phase retardée numériquement de la valeur à compenser τ, de sorte que la fréquence de ce signal n'a pas de retard apparent.

Cette compensation permet de simuler des hauteurs nulles, et on peut l'étendre à de fortes hauteurs en ajoutant un retard numérique correspondant au délai de propagation associé.

Selon un mode de réalisation, le système numérique de validation de radioaltimètre comprend :
- un premier convertisseur configuré pour convertir le signal émis sous forme complexe en coordonnées cartésiennes *I*(*t - τ*) *+ jQ*(*t - τ*) en coordonnées polaires sous forme *ρe*^{*j*ϕ(*t-τ*)} ;
- un décaleur configuré pour effectuer un décalage à gauche d'un bit ou multiplication binaire par 2 de la phase du signal de sortie du premier convertisseur ;
- un retardateur configuré pour appliquer un retard de ladite latence τ à la phase du signal de sortie du premier convertisseur ;
- un soustracteur configuré pour soustraire la phase de sortie du décaleur de la phase de sortie retardateur ; et
- un deuxième convertisseur configuré pour convertir le signal de sortie du système numérique, ayant pour module p celui en sortie du premier convertisseur et pour phase la phase de sortie du soustracteur 2ϕ(*t* - τ) - ϕ(*t* - 2τ) en un signal sous forme complexe en coordonnées cartésiennes *I'*(*t*) *+ jQ*'(*t).*

Un chirp linéaire est un signal à modulation linéaire de f*r*équence f, et donc à phase quadratique ϕ, que l'on peut respectivement exprimer sous la forme f(t) = αt + β et $ϕ \left(t\right) / 2 π = {\int }_{0}^{t} f \left(u\right) du + γ = \frac{{αt}^{2}}{2} + βt + γ$. On peut exprimer les paramètres α, β en fonction des fréquences minimales fₘᵢₙ et maximales fₘₐₓ du chirp et de sa durée T selon $α = \frac{{f}_{max} - {f}_{min}}{T}$, β = fₘᵢₙ , et γ la fraction initiale de la phase *ϕ*(0)/2*π*

Selon un mode de réalisation, le premier convertisseur comprend un module CORDIC configuré pour mettre en œuvre un calcul numérique par rotation de coordonnées pour des calculs de fonctions trigonométriques et hyperboliques.

Dans un mode de réalisation, le retardateur comprend une file FIFO.

Selon un mode de réalisation, le deuxième convertisseur comprend un module CORDIC configuré pour mettre en œuvre un calcul numérique par rotation de coordonnées pour des calculs de fonctions trigonométriques et hyperboliques.

En variante, le deuxième convertisseur comprend un module d'approximation polynomiale par morceaux de l'exponentielle complexe.

Selon un autre mode de réalisation, la carte RF numérique de validation de radioaltimètre comprend :
- un retardateur (Ret2) configuré pour appliquer un retard de ladite latence τ au signal reçu *I*(*t*) *, Q*(*t*) du radioaltimètre par la carte RF ayant déjà subi une latence incompressible τ, *I*(*t* - τ) *, Q*(*t* - τ), et délivrer en sortie le signal reçu du radioaltimètre retardé de 2τ *, I*(*t* - 2τ) , *Q*(*t* - 2τ);
- un multiplicateur complexe (MultComplexe) configuré pour appliquer des multiplications complexes au signal reçu *I*(*t*) *, Q*(*t*) du radioaltimètre par la carte RF ayant déjà subi une latence incompressible τ, *I*(*t* - τ) *, Q*(*t* - τ) , et délivrer en sortie les signaux *I*²(*t* - τ) - *Q*²(*t -* τ) , 2*I*(*t* - τ) *Q*(*t* - τ) , et *I*²(*t* - τ) + *Q*²(*t* - τ) = *ρ*²(*t* - τ);
- un multiplicateur conjugué (MultConj) configuré pour appliquer des multiplications complexes aux signaux de sortie du retardateur (Ret2) et des signaux *I*²(*t* - τ) - *Q*²(*t* - τ) et 2*I*(*t* - τ) *Q*(*t* - τ) de sortie du multiplicateur complexe (MultComp) pour délivrer en sortie les signaux *I*₃ = *I*₁*I*₂ + *Q*₁*Q*₂ et *Q*₃ *= I*₂*Q*₁ *- Q*₂*I*₁; et
- un diviseur (Div) configuré pour appliquer des divisions aux signaux de sortie du multiplicateur conjugué (MultConj) par la sortie *I*²(*t* - τ) + *Q*²(*t* - τ) = *ρ*²(*t* - τ) du multiplicateur complexe (MultComplexe), et délivrer en sortie le signal *Î*(*t*) *+ jQ̂*(*t*) *= ρe*^{*j(*2*ϕ*(*t-*τ)*-ϕ*(*t-*2τ))}.

L'invention sera mieux comprise à l'étude de quelques modes de réalisation décrits à titre d'exemples nullement limitatifs et illustrés par les dessins annexés sur lesquels :
- la [Fig.1] illustre schématiquement une carte RF numérique de validation de radioaltimètre, selon un aspect de l'invention ; et
- la [Fig.2] illustre schématiquement une carte RF numérique de validation de radioaltimètre, selon un autre aspect de l'invention.

La présente invention porte sur un système numérique de validation de radioaltimètre, muni d'une interface RF d'entrée/sortie et caractérisé par une latence incompressible τ, configuré pour recevoir un signal *s(t)* de chirp linéaire FMCW à onde continue modulée linéairement en fréquence *f*(*t*) *= αt + β* et à phase quadratique *s(t) = e*^{2*π*(*αt*²/2 *+βt*+*γ*)}, pouvant également s'écrire sous forme complexe en coordonnées cartésiennes *I*(*t*) *+ jQ*(*t*), *t* représentant le temps. Le système numérique de validation de radioaltimètre est également configuré pour réémettre le signal *s(t)* selon un retard configurable et délivrer au radioaltimètre un signal *I'*(*t*) + *jQ'*(*t*) exactement compensé en fréquence pour la latence τ par une extrapolation linéaire de sa phase par calcul de différence entre la phase courante et la phase retardée numériquement de la valeur à compenser τ.

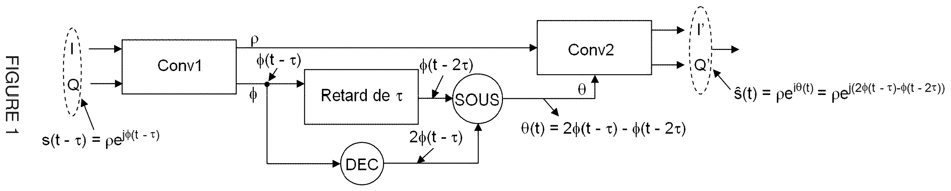

La [Fig.1] représente schématiquement une carte RF numérique de validation de radioaltimètre, selon un mode de réalisation de l'invention.

Le système numérique est également configuré pour délivrer au radioaltimètre un signal corrigé avec un retard de 2τ sous forme complexe en coordonnées cartésiennes *I'*(*t*) + *jQ*'(*t*) correspondant au signal réfléchi à une hauteur prédéterminée, dans lequel le signal reçu est compensé par une extrapolation linéaire de sa phase, à partir de la phase courante et de la phase retardée numériquement de la valeur à compenser τ.

Le système numérique de validation de radioaltimètre, comprend :
- un premier convertisseur Conv1 configuré pour convertir le signal émis sous forme complexe en coordonnées cartésiennes *I*(*t - τ*) *+ jQ*(*t - τ*) en coordonnées polaires sous forme *ρe*^{*j*ϕ(*t-τ*)} *;*
- un décaleur Dec configuré pour effectuer un décalage à gauche d'un bit ou multiplication binaire par 2 de la phase du signal de sortie du premier convertisseur Conv1 ;
- un retardateur Ret configuré pour appliquer un retard de ladite latence τ à la phase du signal de sortie du premier convertisseur Conv1 ;
- un soustracteur Sous configuré pour soustraire la phase de sortie du décaleur Dec de la phase de sortie retardateur Ret ; et
- un deuxième convertisseur Conv2 configuré pour convertir le signal de sortie du système numérique, ayant pour module p celui en sortie du premier convertisseur Conv1 et pour phase la phase de sortie du soustracteur Sous 2ϕ(*t* - τ) - ϕ(*t* - 2τ), en un signal sous forme complexe en coordonnées cartésiennes *I'*(*t*) *+ jQ*'(*t*)*.*

Il est proposé d'utiliser un système numérique pour simuler le canal de propagation, notamment en introduisant un retard grâce à une file FIFO pour simuler une hauteur. Il est ainsi possible de réaliser tous les tests souhaités.

Malheureusement l'interface RF en entrée/sortie du système numérique possède une latence τ incompressible du fait des temps de propagation, ce qui empêche de simuler des hauteurs inférieures à hₘᵢₙ = cτ/2 ; c correspondant à la célérité de propagation de l'onde dans son milieu (en général assimilée à la vitesse de la lumière dans le vide).

Cependant le fait d'être en numérique permet de compenser ce retard par l'application d'un signal à pente de phase négative (non causal). Autrement dit, il est possible d'utiliser des opérateurs complexes pour compenser la phase de la quantité dont elle a varié au cours de la durée τ.

Par exemple, l'onde reçue continue modulée en fréquence peut être de forme *e*^{2*jπ*(*αt*²/2 *+βt+γ*)}, et le principe de chirps peut être linéaire à pente variable de fréquence *f*(*t*) *= αt + β .*

La correction de phase est compatible avec un temps de propagation nul pour le test d'un radioaltimètre FMCW.

Il est possible d'écrire la fréquence d'un chirp linéaire selon f(t) = αt + β, et donc le chirp associé peut s'écrire $s \left(t\right) = {ρe}^{2 jπ \left({\int }_{0}^{t} f \left(u\right) du + γ\right)} = {ρe}^{2 jπ \left({\int }_{0}^{t} αu + βdu + γ\right)} = {ρe}^{2 jπ \left({αt}^{2}/2+βt+γ\right)}$ .

Le signal reçu r correspond alors essentiellement au signal émis s, avec un retard τ et une atténuation Λ. En mélangeant les deux, on obtient une fréquence de battement pure : $BF \left(t\right) = s \left(t\right) \times r * \left(t\right) = s \left(t\right) \times Λ s * \left(t-τ\right) ;$ $BF \left(t\right) = {Λρ}^{2} \times {e}^{2 jπ \left(\frac{{αt}^{2}}{2}+βt+γ\right)} \times {e}^{- 2 jπ \left(\frac{α {\left(t-τ\right)}^{2}}{2}+β\left(t-τ\right)+γ\right)} = {Λρ}^{2} \times {e}^{2 jπ \left(ατt+τ\left(β-ατ/2\right)\right)}$

La fréquence de ce signal est f_{BF} = ατ, et on peut en déduire la hauteur du porteur comme $h = \frac{c \times τ}{2} = \frac{c \times {f}_{BF}}{2 α}$.

Il est possible de fixer la valeur de α à l'émission et chercher à déterminer la valeur de f_{BF} en réception, soit faire varier la valeur de α de manière à obtenir une fréquence f_{BF} connue. Ce dernier principe, moins complexe à implémenter, est celui des radioaltimètres à pente asservie.

En étudiant les déphasages de signal émis, il apparaît que ϕ(*t* - τ) - ϕ(t - 2τ) = ϕ(t) - ϕ(t - T) - 2πατ², soit
Φ(t) = 2ϕ(t - τ) - ϕ(t - 2τ) + 2πατ². Pour un chirp linéaire, α est constant et donc 2πατ² également : en mélangeant le signal reçu retardé de τ avec le signal retardé de 2τ, on obtient un signal compensé en fréquence.

Le premier convertisseur Conv1 peut comprendre un module CORDIC configuré pour mettre en œuvre un calcul numérique par rotation de coordonnées pour des calculs de fonctions trigonométriques et hyperboliques.

Le retardateur Ret peut comprendre une file de type FIFO premier entré premier sorti.

Le deuxième convertisseur Conv2 peut comprendre un module CORDIC configuré pour mettre en œuvre un calcul numérique par rotation de coordonnées pour des calculs de fonctions trigonométriques et hyperboliques.

En variante, le deuxième convertisseur Conv2 peut comprendre un module d'approximation polynomiale par morceaux de l'exponentielle complexe.

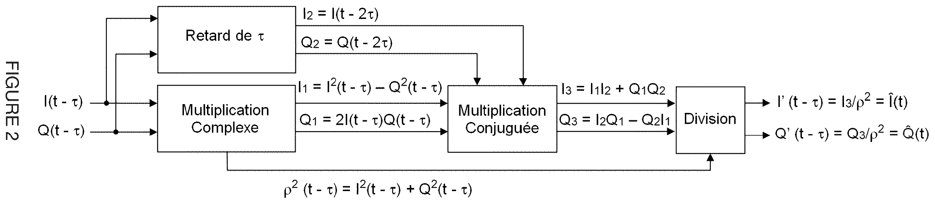

Selon un autre mode de réalisation, tel qu'illustré sur la [Fig.2], le système numérique de validation de radioaltimètre comprend :
- un retardateur (Ret2) configuré pour appliquer un retard de ladite latence τ au signal reçu *I*(*t*) *, Q*(*t*) du radioaltimètre par la carte RF ayant déjà subi une latence incompressible τ, *I*(*t* - τ) *, Q*(*t* - τ), et délivrer en sortie le signal reçu du radioaltimètre retardé de 2τ *, I*(*t* - 2τ) , *Q*(*t* - 2τ);
- un multiplicateur complexe (MultComplexe) configuré pour appliquer des multiplications complexes au signal reçu *I*(*t*) *, Q*(*t*) du radioaltimètre par la carte RF ayant déjà subi une latence incompressible τ, *I*(*t* - τ) *, Q(t* - τ) , et délivrer en sortie les signaux *I*²(*t* - τ) - *Q*²(*t -* τ) , 2*I*(*t -* τ) *Q*(*t* - τ) , et *I*²(*t -* τ) + *Q*²(*t* - τ) = *ρ*²;
- un multiplicateur conjugué (MultConj) configuré pour appliquer des multiplications complexes aux signaux de sortie du retardateur (Ret2) et des signaux *I*²(*t* - τ) - *Q*²(*t* - τ) et 2*I*(*t* - τ) *Q*(*t* - τ) de sortie du multiplicateur complexe (MultComp) pour délivrer en sortie les signaux *I*₃ = *I*₁*I*₂ + *Q*₁*Q*₂ et *Q*₃ *= I*₂*Q*₁ *- Q*₂*I*₁; et
- un diviseur (Div) configuré pour appliquer des divisions aux signaux de sortie du multiplicateur conjugué (MultConj) par la sortie *I*²(*t* - τ) + *Q*²(*t* - τ) = *ρ*² du multiplicateur complexe (MultComplexe), et délivrer en sortie le signal *Î*(*t*) *+ jQ̂*(*t*) = *ρe*^{*j*(2*ϕ*(*t-τ*)-*ϕ*(*t-*2*τ*))}*.*

Le fait d'avoir une architecture numérique permet de réaliser des scénarios dynamiques complexes avec une grande variété de hauteurs possibles.

La compensation de phase réalisée permet de restaurer la valeur de la fréquence.

La présente invention est simple à implémenter, et peu sensible au bruit de phase.

## Revendications

1. Système numérique de validation de radioaltimètre, muni d'une interface RF d'entrée/sortie et **caractérisé par** une latence incompressible τ, configuré pour recevoir un signal *s(t)* de chirp linéaire (FMCW) à onde continue modulée linéairement en fréquence *f*(*t*) *= αt + β* et à phase quadratique *s(t) = e*^{2*jπ*(*αt*²/2 +*βt+γ*)}, pouvant également s'écrire sous forme complexe en coordonnées cartésiennes *I*(*t*) *+ jQ*(*t*), *t* représentant le temps, et configuré pour le réémettre selon un retard configurable et délivrer au radioaltimètre un signal *I'*(*t*) *+ jQ'(t)* exactement compensé en fréquence pour la latence τ par une extrapolation linéaire de sa phase par calcul de différence entre la phase courante et la phase retardée numériquement de la valeur à compenser τ.

2. Système numérique de validation de radioaltimètre, selon la revendication 1, comprenant :
- un premier convertisseur (Conv1) configuré pour convertir le signal émis sous forme complexe en coordonnées cartésiennes *I*(*t*) *+ jQ*(*t*) en coordonnées polaires sous forme *ρe*^{*j*ϕ(*t-*τ)} ;
- un décaleur (Dec) configuré pour effectuer un décalage à gauche d'un bit ou multiplication binaire par 2 de la phase du signal de sortie du premier convertisseur (Conv1) ;
- un retardateur (Ret) configuré pour appliquer un retard de ladite latence τ à la phase du signal de sortie du premier convertisseur (Conv1) ;
- un soustracteur (Sous) configuré pour soustraire la phase de sortie du décaleur (Dec) de la phase de sortie retardateur (Ret) ; et
- un deuxième convertisseur (Conv2) configuré pour convertir le signal de sortie du système numérique, ayant pour module p celui en sortie du premier convertisseur (Conv1) et pour phase la phase de sortie du soustracteur (Sous) 2ϕ(*t* - τ) - ϕ(*t* - 2τ), en un signal sous forme complexe en coordonnées cartésiennes *I'*(*t*) *+ jQ'*(*t*).

3. Système numérique de validation de radioaltimètre, selon la revendication 2, dans lequel le premier convertisseur (Conv1) comprend un module CORDIC configuré pour mettre en œuvre un calcul numérique par rotation de coordonnées pour des calculs de fonctions trigonométriques et hyperboliques.

4. Système numérique de validation de radioaltimètre, selon la revendication 2 ou 3, dans lequel le retardateur (Ret) comprend une file FIFO.

5. Système numérique de validation de radioaltimètre, selon l'une des revendications 2 à 4, dans lequel le deuxième convertisseur (Conv2) comprend un module CORDIC configuré pour mettre en œuvre un calcul numérique par rotation de coordonnées pour des calculs de fonctions trigonométriques et hyperboliques.

6. Système numérique de validation de radioaltimètre, selon l'une des revendications 2 à 4, dans lequel le deuxième convertisseur (Conv2) comprend un module d'approximation polynomiale par morceaux de l'exponentielle.

7. Système numérique de validation de radioaltimètre, selon la revendication 1, comprenant :
- un retardateur (Ret2) configuré pour appliquer un retard de ladite latence τ au signal reçu *I*(*t*) *, Q*(*t*) du radioaltimètre par la carte RF ayant déjà subi une latence incompressible τ, *I*(*t* - τ) , *Q*(*t* - τ), et délivrer en sortie le signal reçu du radioaltimètre retardé de 2τ *, I*(*t* - 2τ) *, Q*(*t* - 2τ);
- un multiplicateur complexe (MultComplexe) configuré pour appliquer des multiplications complexes au signal reçu *I*(*t*), *Q*(*t*) du radioaltimètre par la carte RF ayant déjà subi une latence incompressible τ, *I*(*t* - τ) , *Q*(*t* - τ) , et délivrer en sortie les signaux *I*²(*t* - τ) - *Q*²(*t* - τ) , 2*I*(*t* - τ) *Q*(*t* - τ) , et *I*²(*t* - τ) + *Q*²(*t - τ*) *= p*²(*t -* τ);
- un multiplicateur conjugué (MultConj) configuré pour appliquer des multiplications complexes aux signaux de sortie du retardateur (Ret2) et des signaux *I*²(*t* - τ) - *Q*²(*t* - τ) et *21(t* - τ) *Q(t* - τ) de sortie du multiplicateur complexe (MultComp) pour délivrer en sortie les signaux *I*₃ = *I*₁*I*₂ + *Q*₁*Q*₂ et *Q*₃ *= I*₂*Q*₁ *- Q*₂*I*₁; et
- un diviseur (Div) configuré pour appliquer des divisions aux signaux de sortie du multiplicateur conjugué (MultConj) par la sortie *I*²(*t* - τ) *+ Q*²(*t* - τ) = *ρ*²(*t* - τ) du multiplicateur complexe (MultComplexe), et délivrer en sortie le signal *Î*(*t*) *+ jQ̂*(*t*) = *ρe*^{*j*(2*ϕ*(*t-τ*)-*ϕ*(*t-*2*τ*))}*.*

## Patentansprüche

1. Digitales Funkhöhenmesser-Validierungssystem, das mit einer HF-Eingangs-/Ausgangsschnittstelle ausgestattet ist und durch eine inkompressible Latenz *τ* gekennzeichnet ist, konfiguriert ist, ein lineares Chirp-Signal *s(t)* (FMCW) mit kontinuierlicher Welle, deren Frequenz *f*(*t*) *= αt + β* linear moduliert ist, und mit quadratischer Phase *s*(*t*) *= e*^{2*jπ*(*αt*²/2*+βt+γ*)}, zu empfangen, das ebenfalls in komplexer Form mit kartesischen Koordinaten *I*(*t*) *+ jQ*(*t*), geschrieben werden kann, wobei *t* die Zeit darstellt, und das konfiguriert ist, dieses entsprechend einer konfigurierbaren Verzögerung erneut auszusenden und dem Höhenmesser ein Signal *I*'(*t*) *+ jQ*'(*t*) auszugeben, das für die Latenz *τ* durch eine lineare Extrapolation seiner Phase durch Berechnung der Differenz zwischen der aktuellen Phase und der digital verzögerten Phase des auszugleichenden Werts *τ* genau frequenzkompensiert ist.

2. Digitales Funkhöhenmesser-Validierungssystem nach Anspruch 1, umfassend:
- einen ersten Konvertierer (Conv1), der konfiguriert ist, das in komplexer Form mit kartesischen Koordinaten *I*(*t*) *+ jQ*(*t*) ausgesendete Signal in Polarkoordinaten der Form *ρe*^{*jϕ*(*t-τ*)} zu konvertieren;
einen Verschieber (Dec), der konfiguriert ist, eine Verschiebung um ein Bit nach links oder eine binäre Multiplikation mit 2 der Phase des Ausgangssignals des ersten Konvertierers (Conv1) durchzuführen;
- einen Verzögerer (Ret), der konfiguriert ist, eine Verzögerung der Latenz *τ* an der Phase des Ausgangssignals des ersten Konvertierers (Conv1) anzulegen;
- einen Subtraktor (Sous), der konfiguriert ist, die Ausgangsphase des Verschiebers (Dec) von der Ausgangsphase des Verzögerers (Ret) abzuziehen; und
- einen zweiten Konvertierer (Conv2), der konfiguriert ist, das Ausgangssignal des digitalen Systems, das als Modul *ρ* jenes am Ausgang des ersten Konvertierers (Conv1) und als Phase die Ausgangsphase des Subtraktors (Sous) 2*ϕ*(*t* - *τ*) *- Φ*(*t* - 2*τ*) aufweist, in ein Signal in komplexer Form mit kartesischen Koordinaten *I'*(*t*) *+ jQ*'(*t*) zu konvertieren.

3. Digitales Funkhöhenmesser-Validierungssystem nach Anspruch 2, wobei der erste Konvertierer (Conv1) ein CORDIC-Modul umfasst, das konfiguriert ist, eine digitale Berechnung durch Drehung von Koordinaten für Berechnungen von trigonometrischen und hyperbolischen Funktionen einzusetzen.

4. Digitales Funkhöhenmesser-Validierungssystem nach Anspruch 2 oder 3, wobei der Verzögerer (Ret) eine FIFO-Warteschlange umfasst.

5. Digitales Funkhöhenmesser-Validierungssystem nach einem der Ansprüche 2 bis 4, wobei der zweite Konvertierer (Conv2) ein CORDIC-Modul umfasst, das konfiguriert ist, eine digitale Berechnung durch Drehung von Koordinaten für die Berechnungen von trigonometrischen und hyperbolischen Funktionen einzusetzen.

6. Digitales Funkhöhenmesser-Validierungssystem nach einem der Ansprüche 2 bis 4, wobei der zweite Konvertierer (Conv2) ein Modul zur schrittweisen polynomischen Annäherung an die Exponentialfunktion umfasst.

7. Digitales Funkhöhenmesser-Validierungssystem nach Anspruch 1, umfassend:
einen Verzögerer (Ret2), der konfiguriert ist, eine Verzögerung der Latenz *τ* am Signal *I*(*t*)*, Q*(*t*) anzuwenden, das von dem Höhenmesser durch die HF-Karte empfangen wird, der bereits einer inkompressiblen Latenz *τ, I*(*t - τ*), *Q*(*t - τ*) unterzogen wurde, und am Ausgang das vom Höhenmesser empfangene, um 2*τ, I*(*t -* 2τ), *Q*(*t -* 2*τ*) verzögerte Signal auszugeben;
- einen komplexen Multiplikator (MultComplexe), der konfiguriert ist, komplexe Multiplikationen am Signal *I*(*t*)*, Q*(*t*), das von dem Höhenmesser durch die HF-Karte empfangen wird, der bereits einer inkompressiblen Latenz *τ, I*(*t - τ*), *Q*(*t - τ*) unterzogen wurde, anzuwenden, und am Ausgang die Signale *I*²(*t - τ*) *- Q*²(*t - τ*), 2*I*(*t - τ*) *Q* (*t - τ*) und *I*²(*t* - *τ*) *+ Q*²(*t - τ*) = *ρ*²(*t* - *τ*); auszugeben
- einen konjugierten Multiplikator (MultConj), der konfiguriert ist, komplexe Multiplikationen an den Ausgangssignalen des Verzögerers (Ret2) und den Ausgangssignalen *I*²(*t* - *τ*) *- Q*²(*t - τ*) und 2*I*(*t - τ*) *Q* (*t - τ*) des komplexen Multiplikators (MultComp) anzuwenden, um am Ausgang die Signale *I*₃ = *I*₁*I*₂ *+ Q*₁*Q*₂ und *Q*₃ = *I*₂*Q*₁ - *Q*₂*I*₁ auszugeben; und
- einen Divisor (Div), der konfiguriert ist, Divisionen an den Ausgangssignalen des konjugierten Multiplikators (MultConj) durch den Ausgang *I*²(*t - τ*) *+ Q*²(*t - τ*) *= ρ*²(*t - τ*) des komplexen Multiplikators (MultComplexe) anzuwenden, und am Ausgang das Signal *Î*(*t*) *+ jQ̂*(*t*) = *ρe*^{*j*(2*ϕ*(*t-τ*)-*ϕ*(*t-*2*τ*))} auszugeben.

## Claims

1. Digital radio altimeter validation system, provided with an input/output RF interface and **characterized by** an incompressible latency *τ,* configured to receive a linear chirp (FMCW) signal *s(t)* with linearly frequency-modulated continuous-wave *f*(*t*) *= αt* + *β* and with quadratic phase *s*(*t*) = *e*^{2*jπ*(*αt*²/2+*βt+γ*}), which can also be written in complex form in Cartesian coordinates *I*(*t*) *+ jQ*(*t*), *t* representing time, and configured to retransmit it according to a configurable delay and deliver to the radio altimeter a signal *I'*(*t*) *+ jQ*'(*t*) exactly frequency-compensated for the latency *τ* by a linear extrapolation of its phase by calculating the difference between the current phase and the phase digitally delayed by the value *τ* to be compensated.

2. Digital radio altimeter validation system according to claim 1, comprising:
- a first converter (Conv1) configured to convert the transmitted signal in complex form in Cartesian coordinates *I*(*t*) *+ jQ*(*t*) into polar coordinates in the form *ρe*^{*jϕ*(*t-τ*)};
- a shifter (Dec) configured to perform a one-bit left shift or binary multiplication by 2 of the phase of the output signal of the first converter (Conv1);
- a delay unit (Ret) configured to apply a delay of said latency τ to the phase of the output signal of the first converter (Conv1);
- a subtractor (Sous) configured to subtract the output phase of the shifter (Dec) from the output phase of the delay unit (Ret); and
- a second converter (Conv2) configured to convert the output signal of the digital system, having as its modulus *ρ* that at the output of the first converter (Conv1) and as its phase the output phase of the subtractor (Sous) 2*ϕ*(*t* - *τ*) *- ϕ*(*t* - 2*τ*), into a signal in complex form in Cartesian coordinates *I'*(*t*) *+ jQ'*(*t*).

3. Digital radio altimeter validation system according to claim 2, wherein the first converter (Conv1) comprises a CORDIC module configured to implement a numerical calculation by coordinate rotation for calculations of trigonometric and hyperbolic functions.

4. Digital radio altimeter validation system according to claim 2 or 3, wherein the delay unit (Ret) comprises a FIFO queue.

5. Digital radio altimeter validation system according to any one of claims 2 to 4, wherein the second converter (Conv2) comprises a CORDIC module configured to implement a numerical calculation by coordinate rotation for calculations of trigonometric and hyperbolic functions.

6. Digital radio altimeter validation system according to any one of claims 2 to 4, wherein the second converter (Conv2) comprises a piecewise polynomial approximation module of the exponential.

7. Digital radio altimeter validation system according to claim 1, comprising:
- a delay unit (Ret2) configured to apply a delay of said latency *τ* to the signal *I*(*t*)*, Q*(*t*) received from the radio altimeter by the RF board and having already undergone an incompressible latency *τ, I*(*t - τ*), *Q*(*t - τ*), and to deliver as output the signal received from the radio altimeter delayed by 2*τ, I*(*t* - 2τ), *Q*(*t* - 2*τ*);
- a complex multiplier (MultComplexe) configured to apply complex multiplications to the signal *I*(*t*)*, Q*(*t*) received from the radio altimeter by the RF board and having already undergone an incompressible latency *τ, I*(*t - τ*), *Q*(*t - τ*), and to deliver as output the signals *I*²(*t* - τ) *- Q*²(*t* - *τ*),2*I*(*t - τ*)*Q*(*t - τ*), and *I*²(*t* - *τ*) *+ Q*²(*t - τ*) *= ρ*²(*t - τ*);
- a conjugate multiplier (MultConj) configured to apply complex multiplications to the output signals of the delay unit (Ret2) and the signals *I*²(*t* - *τ*) *- Q*²(*t - τ*) and 2*I*(*t - τ*)*Q*(*t - τ*) output by the complex multiplier (MultComp) to deliver as output the signals *I*₃ = *I*₁*I*₂ *+ Q*₁ *Q*₂ nd *Q*₃ = *I*₂*Q*₁ - *Q*₂*I*₁; and
- a divider (Div) configured to apply divisions to the output signals of the conjugate multiplier (MultConj) by the output *I*²(*t* - *τ*) *+ Q*²(*t - τ*) *= ρ*²(*t - τ*) of the complex multiplier (MultComplexe), and to deliver as output the signal *Î*(*t*) *+ jQ̂*(*t*) *= ρe*^{*j*(2*ϕ*(*t-τ*)-*ϕ*(*t-*2*τ*))}*.*
